# EUROPEAN PATENT APPLICATION

(11) **EP 1 927 945 A2**
(43) Date of publication of application: **04.06.2008**
(21) Application number: 07023131.1
(22) Date of filing: 29.11.2007
(51) Int. Cl.: G06Q 30/00

(54) **System and method for creating customized mail offers**

(30) Priority: 01.12.2006 US 607210
(71) Applicant: PITNEY BOWES INC., Stamford, CT 06926-0700 (US)
(72) Inventor: Cordery, Robert A., Danbury Connecticut 06811 (US); Biasi, Theresa, Shelton Connecticut 06484 (US); Obrea, Andrei, Seymour Connecticut 06483 (US); Das, Pradeep K., Bethel Connecticut 06801 (US); Pintsov, Leon A., West Hartford Connecticut 06117 (US); Parkos, Maria P., Southbury Connecticut 06488 (US); Freeman, Gary L., Stamford Connecticut 06902 (US)
(74) Representative: HOFFMANN EITLE

(57) **Abstract**

A system for generating direct offers includes a computer system (10) adapted to generate a group of offers, a list of targeted recipients (25) that may be potential customers, and a set of business rules for selecting appropriate ones of the offers based at least in part on certain personal recipient information. The system also includes a third party computer system (30) and a database (35) that stores in confidence personal information for each of the targeted recipients. The third party computer system (30) is adapted to receive the offers, the list of targeted recipients, and the set of business rules, select an appropriate one of the offers, if any, for each targeted recipient according to the business rules based at least in part on the personal information of the targeted recipients, and construct and cause to be sent a final offer for each of the targeted recipients for which an offer has been selected.

## Description

The present invention relates to direct mail offers, and in particular to a system and method for creating direct mail offers that protects the personal and/or confidential information of potential recipients.

Direct mail as a form of marketing has been utilized for many years. Studies have confirmed that the more that a direct mail offer can be customized for a particular intended recipient, for example to include some personal information relating to the recipient, the more likely that it is to be successful. Such customized direct mail, however, requires knowledge of the personal and/or confidential information of the intended recipient. While some consumers freely provide such personal and/or confidential information to businesses with which they may have some contact (e.g., via a survey or the like), many consumers are reluctant to share that information freely, Instead, such consumers prefer to keep their personal and/or confidential information, which would be of value in creating customized direct mail offers, confidential. It is therefore difficult to prepare customized direct mail for consumers that prefer such privacy. Thus, there is a need for a system that enables direct mailers to send customized direct mail offers to potential customers while at the same time allowing the potential customers to protect the secrecy of their personal and/or confidential information.

In one embodiment, the invention provides a method of generating direct offers from an offeror, e.g., a mailer, that includes storing personal information for each of a plurality of potential customers at a location remote from the mailer in a manner such that the personal information is not accessible by the mailer, and receiving from the mailer a group of one or more offers, a list of targeted recipients, i.e., potential customers, for potentially receiving one of the offers, and a set of business rules for selecting appropriate ones of the offers based at least in part on certain personal recipient information. The method also includes accessing the personal information that is stored for each of the targeted recipients, selecting an appropriate one of the one or more offers, if any, for each of the targeted recipients according to the set of business rules based at least in part on the personal information of each of the targeted recipients that is accessed, and constructing a final offer for each of the targeted recipients for which an appropriate one of the one or more offers has been selected, wherein each final offer is based on the corresponding appropriate one of the one or more offers that has been selected. Finally, the method includes communicating each final offer to the targeted recipient with which it is associated.

In another embodiment, the invention provides a method of generating direct offers from an offeror, e.g., a mailer, including generating a group of one or more offers, a list of targeted recipients for potentially receiving one of the offers, and a set of business rules for selecting appropriate ones of the offers based at least in part on certain personal recipient information, and transmitting the group of one or more offers, the list of targeted recipients, and the set of business rules to a third party service provider. The third party service provider stores personal information for each of the targeted recipients at a location remote from the mailer in a manner such that the personal information is not accessible by the mailer. The third party service provider also selects an appropriate one of the one or more offers, if any, for each of the targeted recipients according to the set of business rules based at least in part on the personal information of the each of the targeted recipients, constructs a final offer for each of the targeted recipients for which an appropriate one of the one or more offers has been selected, wherein each final offer is based on the corresponding appropriate one of the one or more offers that has been selected, and communicates each final offer to the targeted recipient with which it is associated.

In still another embodiment, the invention provides a system for generating direct offers from an offeror, e.g., a mailer, that includes a mailer computer system that is adapted to generate a group of one or more offers, a list of targeted recipients for potentially receiving one of the one or more offers, and a set of business rules for selecting appropriate ones of the one or more offers based at least in part on certain personal recipient information. The system also includes a third party computer system in electronic communication with a third party database that stores personal information for each of the targeted recipients in a manner such that the personal information is not accessible by the mailer. The third party computer system is adapted to receive the group of one or more offers, the list of targeted recipients, and the set of business rules, select an appropriate one of the one or more offers, if any, for each of the targeted recipients according to the set of business rules based at least in part on the personal information of the each of the targeted recipients accessed from the third party database, construct a final offer for each of the targeted recipients for which an appropriate one of the one or more offers has been selected, wherein each final offer is based on the corresponding appropriate one of the one or more offers that has been selected, and cause each final offer to be communicated to the targeted recipient with which it is associated.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts.

Figure 1 is a block diagram of a system for creating direct offers according to an embodiment of the present invention; and

Figure 2 is a flowchart of a method of creating customized direct offers that may be implemented in the system shown in Figure 1 according to an embodiment of the present invention.

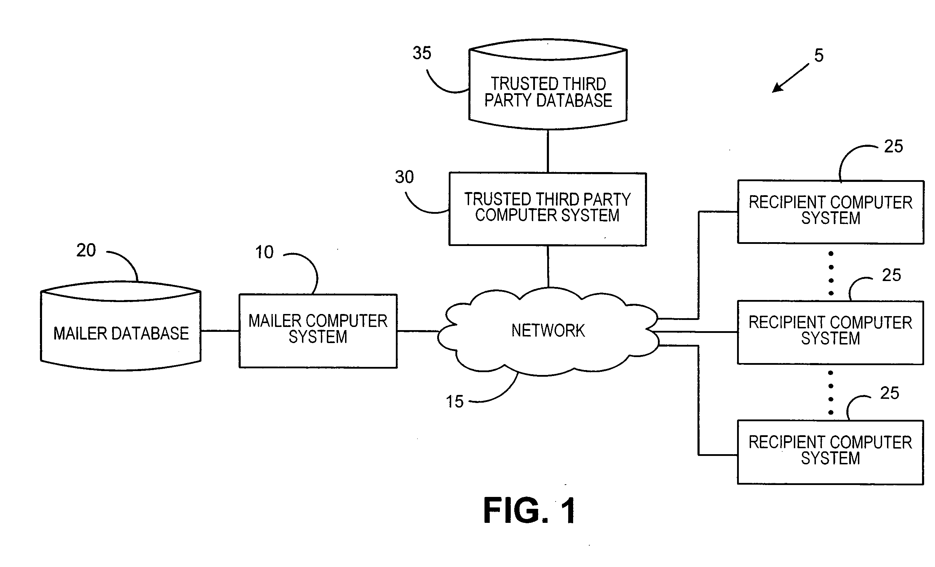

Figure 1 is a block diagram of a system 5 for creating direct offers according to an embodiment of the present invention. The term "direct offer" as used herein shall refer to any type of marketing or similar offer that is directed to and communicated (using any suitable means) to a specific targeted recipient, including, without limitation, written offers mailed to recipients using the traditional physical mail system (e.g., the USPS), and electronic offers such as, without limitation, email offers, offers taking the form of a personalized web page (with an invitation to visit that page sent by, for example, email), or cell phone text messages. The system 5 includes a mailer computer system 10 that is in electronic communication with a network 15, which may be, for example, the Internet, one or more private computer networks, or any combination thereof. The term "mailer" as used herein shall refer to any type of party that desires to send a direct offer, i.e., an offeror. The mailer computer system 10 is operated by and under the control of a business mailer that desires to send customized direct offers to a plurality of recipients that may be potential customers. The mailer computer system 10 is also in electronic communication with a mailer database 20 which stores certain information relating to each of the plurality of recipients that may be potential customers, such as, without limitation, each recipient's name and address (residence address and/or email address), information relating to prior purchases (e.g., products or services) from the mailer made by each recipient, and/or marketing information obtained from other sources, such as, without limitation, other products or services purchased by the recipient from sources other than the mailer. The information stored in the mailer database 20 may be obtained from various sources, including, without limitation, directly from each recipient by way of being communicated to the mailer computer system 10 from a recipient computer system 25 through the network 15.

The system 5 also includes a trusted third party computer system 30 that is in electronic communication with the network 15. The trusted third party computer system 30 is operated by and under the control of a third party service provider that provides the direct mail services described herein. The trusted third party computer system 30 is in electronic communication with a trusted third party database 35 which securely and in confidence stores certain personal and/or confidential information for each of the plurality of recipients that may be potential customers. Preferably, the trusted third party computer system 30 and the trusted third party database 35 are located remotely from the mailer computer system 10. Such personal and/or confidential information may include, without limitation, certain demographic information for each potential customer, and information relating to the income, credit history, interests (e.g., sports, hobbies, etc.), and purchasing history (e.g., particular products purchased from particular sources) of each potential customer (for convenience, such personal and/or confidential information may be referred to herein simply as personal information). Such personal information may also include previous offers from the mailer that have been rejected by the recipient. In the preferred embodiment, each recipient provides such information to the trusted third party computer system 30 from a recipient computer system 25 through the network 15 because the recipient desires to receive customized direct mail offers from the mailer in the manner described herein while at the same time desiring to keep their personal information secret. The recipients may do so knowing that the information will be stored in confidence and not be provided to third parties such as the mailer.

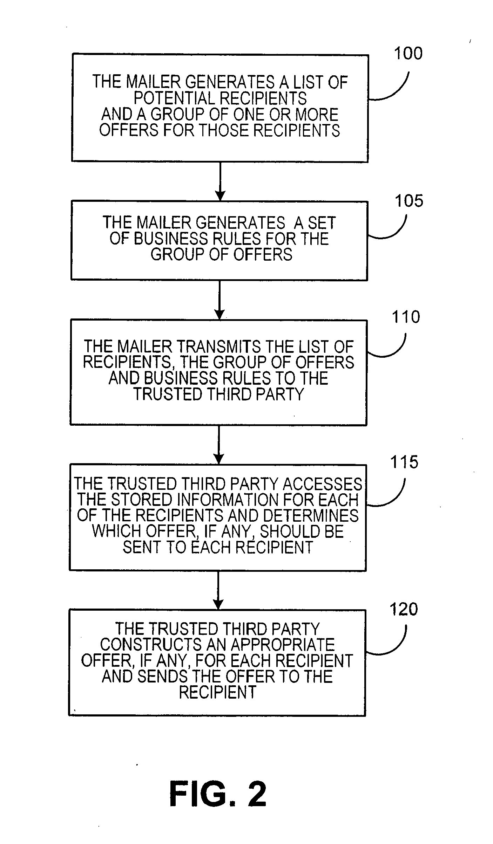

Figure 2 is a flowchart of a method of creating customized direct offers that may be implemented in the system 5 shown in Figure 1 according to an embodiment of the present invention. The method begins at step 100, wherein the mailer that desires to send customized direct offers to a plurality of recipients that may be potential customers and that operates the mailer computer system 10 generates, using the mailer computer system 10: (i) a group of one or more recipient offers, and (ii) a list of recipients that may be potential customers for possibly receiving one of the recipient offers from the group. Preferably, the list of recipients is generated from the information stored in the mailer database 20. For example, each offer in the group of offers that is generated may be designed for a particular class of potential customer, and, depending on the further processing described herein, a selected one of the offers from the group may be sent to each of the recipients on the list that is generated.

Next, at step 1 05, the mailer, preferably using the mailer computer system 10, generates a set of business rules for selecting an appropriate one of the offers, if any, from the group of offers for each recipient on the list based at least in part on certain personal information of each recipient that is preferably stored in a secure, confidential manner in the trusted third party database 35. In other words, the purpose of the business rules is to select the appropriate offer, if any, for each potential customer based on, for example, the classification of the customer according to various criteria. For instance, the set of business rules may comprise a set of Boolean based decision making logic that determines what offer, if any, from the group of offers a particular potential customer is to receive. As an example, the group of offers may be a number of different offers to purchase a product wherein each offer involves a different price and financing scheme, and the set of business rules may specify that all recipients having an income in a first income range and a credit score in a first credit range get a first offer, all recipients having an income in a second income range and a credit score in a second credit range get a different second offer, and so on. As another example, the group of offers may be a number of different offers wherein each offer is to purchase a different, particular product, and the set of business rules may specify that all recipients that have an interest falling within a first set of interests and/or that have previously purchased a product or service from a first set of other products or services get a first offer, all recipients that have an interest falling within a second set of interests and/or that have previously purchased a product or service from a second set of other products or services get a different second offer, and so on.

Next, at step 110, the mailer computer system 10 transmits the list of recipients generated in step 100, the group of offers generated in step 100 and the business rules generated in step 105 to the trusted third party computer system 30 through the network 15. Preferably, the trusted third party maintains the business rules that are received in confidence. The mailer computer system 10 may also transmit to the trusted third party computer system 30 certain other information for the recipients on the list (e.g., address information (residence or email) that is obtained from the mailer database; such information may be included as part of the recipient list). At step 115, the trusted third party computer system 30 then accesses, for each recipient listed in the list received from the mailer computer system 10, the personal information for those recipients that is stored in the trusted third party database 35. In addition, the trusted third party computer system 30 determines which offer from the group of offers, if any, should be sent to each recipient on the list of recipients received from the mailer computer system 10 based on both the business rules received from the mailer computer system 10 and the personal information for each recipient accessed from the trusted third party database 35. In particular, the business rules are applied to the accessed personal information to determine which offer from the group of offers, if any, should be sent to each recipient. Then, at step 120, once it is determined which offer from the group of offers, if any, is to be sent to each recipient, the trusted third party computer system 30 causes the offer for each recipient to be constructed and sent to the recipient. For example, the offer could be a traditional (i.e., paper) direct mail offer, in which case the trusted third party computer system 30 generates instructions for causing such an offer to be created either by a service/facility operated by the trusted third party or by some third party mailing service working at the direction of the trusted third party. As another example, the offer could be an email offer, in which case the trusted third party computer system 30 may generate an email including the offer information and cause the email offer to be sent to the appropriate recipient computer system 25 by email through the network 15 using the email address for the recipient (which email address may be provided to the trusted third party computer system 30 in step 110 as described above). As another example, the offer could be a web page or web page fragment, in which the third party computer system 30 may generate such web page or web page fragment including the offer information and cause the web page or web page fragment to be sent to the appropriate recipient computer system 25 through the network 15 using the current network location of the recipient computer system 25. As another example, the offer could be a cell phone text message, in which the third party computer system 30 may generate such cell phone text message, including the offer information and cause the cell phone text message to be sent to the appropriate recipient cell phone through the network 15 using the current cell phone number for the recipient (which may be provided to the trusted third party computer system 30 in step 110 as described above). Each recipient, upon receiving an offer as described herein, may choose whether to act on the offer or simply ignore it. Thus, with the system and method described herein, the recipients are able to receive customized direct mail offers from a mailer without the mailer having access to their personal and/or confidential information, and the mailer is able to send such offers without the recipients having access to the business rules established by the mailer and used to send the offers.

Optionally, in step 120, the trusted third party computer system 30 could also provide feedback to the mailer indicating the number of each type of offer sent or other information within the constraints of maintaining the privacy of the information held by the trusted third party computer system 30. The mailer could then utilize this feedback to improve future offers or business rules to be used for subsequent offers. The feedback information could also help the mailer with accounting and payment in the situation where the mailer pays some amount for each offer sent.

While preferred embodiments of the invention have been described and illustrated above, it should be understood that these are exemplary of the invention and are not to be considered as limiting. Additions, deletions, substitutions, and other modifications can be made without departing from the spirit or scope of the present invention. Accordingly, the invention is not to be considered as limited by the foregoing description but is only limited by the scope of the appended claims.

## Claims

1. A system for generating direct offers from an offeror (10), comprising:
an offeror computer system (10), said offeror computer system being adapted to generate a group of one or more offers, a list of targeted recipients for potentially receiving one of said one or more offers, and a set of business rules for selecting appropriate ones of said one or more offers based at least in part on certain personal recipient information; and
a third party computer system (30) in electronic communication with a third party database (35) that stores personal information for each of said targeted recipients (25) in a manner such that said personal information is not accessible by said offeror (10), said third party computer system (30) being adapted to receive said group of one or more offers, said list of targeted recipients, and said set of business rules, select an appropriate one of said one or more offers, if any, for each of said targeted recipients (25) according to said set of business rules based at least in part on the personal information of said each of said targeted recipients accessed from said third party database, construct a final offer for each of said targeted recipients for which an appropriate one of said one or more offers has been selected, each said final offer being based on the corresponding appropriate one of said one or more offers that has been selected, and cause each said final offer to be communicated to the one of said targeted recipients with which said final offer is associated.

2. The system according to claim 1, wherein each said final offer is one of a written offer, an email offer, an offer to visit a personalized web page, or a cell phone text message offer.

3. The system according to claim 1 or 2, wherein said offeror computer system (10) is in electronic communication with an offeror database (20) that stores second personal information for each of said targeted recipients, wherein said offeror computer system (10) is adapted to transmit said second personal information for each of said targeted recipients to said third party computer system (30), and wherein said third party computer system is adapted to use said second personal information for each of said targeted recipients to construct the final offers.

4. The system according to claim 3, wherein said second personal information for each of said targeted recipients includes an address for each of said targeted recipients.

5. The system according to any preceding claim, wherein the personal information (35) that is stored for each of said targeted recipients includes one or more of demographic information, income information, credit history information, information relating to personal interests, and information relating to purchasing history.

6. A method of generating direct offers from an offeror (10), comprising:
storing personal information (35) for each of a plurality of recipients at a location remote from said offeror (10), said personal information not being accessible by said offeror;
receiving (110) from said offeror (10) a group of one or more offers, a list of targeted recipients for potentially receiving one of said one or more offers, and a set of business rules for selecting appropriate ones of said one or more offers based at least in part on certain personal recipient information, wherein said plurality of recipients (25) includes said targeted recipients (25);
accessing (115) the personal information (35) that is stored for each of said targeted recipients (25);
selecting (115) an appropriate one of said one or more offers, if any,for each of said targeted recipients according to said set of business rules based at least in part on the personal information of said each of said targeted recipients that is accessed;
constructing (120) a final offer for each of said targeted recipients (25) for which an appropriate one of said one or more offers has been selected, each said final offer being based on the corresponding appropriate one of said one or more offers that has been selected; and
communicating (120) each said final offer to said targeted recipients (25) with which said final offer is associated.

7. The method according to claim 6, wherein each said final offer is one of a written offer, an email offer, an offer to visit a personalized web page or a cell phone text message offer.

8. The method according to claim 6 or 7, wherein said offeror (10) stores second personal information (20) for each of said targeted recipients, said method further comprising receiving from said offeror said second personal information (20) for each of said targeted recipients and using said second personal information for each of said targeted recipients during said constructing step.

9. The method according to claim 8, wherein said second personal information (20) for each of said targeted recipients includes an address for each of said targeted recipients.

10. The method according to any one of claims 6 to 9, wherein the personal information (35) that is stored for each of said targeted recipients includes one or more of demographic information, income information, credit history information, information relating to personal interests, and information relating to purchasing history.

11. The method according to any one of claims 6 to 10, wherein said storing, receiving, accessing, selecting, constructing, and communicating steps are performed by a third party service provider (30) not associated with said offeror (10).

12. The method according to any one of claims 6 to 11, wherein said one or more offers is a plurality of offers.
